# EUROPÄISCHE PATENTSCHRIFT

(11) **EP 0 915 356 B1**
(45) Veröffentlichungstag und Bekanntmachung des Hinweises auf die Patenterteilung: **12.04.2006**
(21) Anmeldenummer: 98117717.3
(22) Anmeldetag: 18.09.1998
(51) Int. Cl.: G02B 6/42, G02B 6/28, H04B 10/12

(54) **Verfahren und Vorrichtung zur Extraktion von Signalen aus einer Glasfaser**
Method and apparatus for extracting signals from a glass fibre
Procédé et dispositif pour extraire des signaux d'une fibre en verre

(30) Priorität: 18.10.1997 DE 19746171
(43) Veröffentlichungstag der Anmeldung: 12.05.1999
(73) Patentinhaber: Deutsche Telekom AG, 53113 Bonn (DE)
(72) Erfinder: Walter, Herbert Dipl.-Phys., 64673 Zwingenberg (DE)
(74) Vertreter: Gornott, Dietmar

(56) Entgegenhaltungen:
- US-A- 3 982 123
- US-A- 4 081 672
- US-A- 4 253 727
- US-A- 4 618 211
- US-A- 4 849 960
- PATENT ABSTRACTS OF JAPAN vol. 013, no. 231 (P-878), 29. Mai 1989 & JP 01 040909 A (FUJIKURA LTD), 13. Februar 1989

## Beschreibung

Die Erfindung betrifft ein Verfahren und eine Vorrichtung zur Extraktion von Signalen aus einer Glasfaser ohne messbare Beeinflussung, insbesondere ohne Dämpfung, der die Glasfaser durchlaufenden Signale.

Die Anwendung von Verfahren nach der Gattung des Hauptanspruchs ist beispielsweise erforderlich zum Abhören von ausgewählten Nachrichtenverbindungen zu Zwecken hoheitlicher Überwachung oder - ohne Auswertung des Nachrichteninhaltes - zur Gewinnung betrieblicher Daten für den Betreiber eines Telekommunikationsnetzes. Dabei soll stets ein möglichst kleiner Teil der in der Glasfaser übertragenen Lichtleistung ausgekoppelt werden, wofür in diesem Zusammenhang der Begriff Extraktion bzw. Signal-Extraktion verwendet wird, wobei die Signalfortpflanzung in Richtung auf den regulären Empfänger auch nicht nur kurzzeitig unterbrochen werden soll.

Bisher gebräuchliche Signal-Extraktions-Verfahren beruhen auf der Wirkungsweise von Biegekopplern, wie sie beispielsweise in JP 01040909 A beschrieben sind. Dabei tritt aus einer gekrümmten Glasfaser am Außenrand, d. h. am äußeren Durchmesser, ein Teil des von der Glasfaser geführten Signals aus und wird in geeigneter Weise bevorzugt in einen anderen Lichtwellenleiter, beispielsweise eine Glasfaser oder einen integriert-optischen Wellenleiter, eingekoppelt. Alternativ kann das extrahierte Signal auch direkt auf einen opto-elektrischen Wandler (Photodetektor) geführt werden. Der dabei genutzte physikalische Mechanismus ist folgender: Durch die Biegung wird ein Teil der regulären geführten Mode(n) in Strahlungsmoden umgewandelt. Letztere pflanzen sich teilweise im Fasermantel und in der Faserumhüllung fort und werden auch teilweise in den Außenraum abgestrahlt. Der im Faserkern verbleibende Signalanteil wird daher gedämpft.

Die Signal-Extraktion mit Biegekopplern ist zwar technisch einfach und daher problemlos anwendbar, jedoch aufgrund der unvermeidlichen Dämpfung des Abhörens grundsätzlich nachweisbar. Ein solches bekanntes Verfahren ist beschrieben in: E.A.J. Marcatili, Bends in Optical Dielectric Guides. The Bell System Technical Journal, S. 2103-2133, 1969. Die dadurch hervorgerufenen Zusatzdämpfungen können mit einem optischen Zeitbereichsreflektometer (OTDR) in ihrer Stärke gemessen und lokalisiert werden.

In US 3,982,123 wird ein optischer Koppler beschrieben, bei welchem die Glasfaser in direktem Kontakt zu einem dielektrischen Körper steht, wodurch Lichtenergie aus der Glasfaser in den elektrischen Körper austritt und von einem Photodetektor in elektrische Signale umgewandelt wird.

Diese Anordnung ermöglicht zwar die Auskopplung von Signalenergie aus einer Glasfaser ohne eine Unterbrechung der Glasfaser. Die in der Glasfaser geführte optische Energie wird jedoch deutlich vermindert.

In US 4,618,211 wird eine Auskopplungsvorrichtung aus einer Glasfaser mit aktivierbaren Chemikalien beschrieben, die auf der Rayleigh-Streuung beruht, die durch Kontaminierung der Glasfaser mit verschiedenen Stoffen und deren Aktivierung durch energiereiche Strahlung gegenüber der ohnehin vorhandenen Rayleigh-Streuung erhöht wird.

Aufgabe der vorliegenden Erfindung ist es, eine Signal-Extraktion ohne messbare Beeinflussung der die Glasfaser durchlaufenden Signale zu ermöglichen.

Diese Aufgabe wird dadurch gelöst, dass das austretende Licht mittels fokussierender Elemente auf eine Eintrittsfläche einer weiteren Glasfaser geleitet wird und über diese zu einem Erbiumverstärker gelangt und dass das Ausgangssignal des Erbiumverstärkers dem Photodetektor zugeführt wird.

Durch die sogenannte Rayleigh-Streuung tritt ohnehin seitlich aus der Glasfaser Licht aus. Die Rayleigh-Streuung ist beispielsweise beschrieben in: P. O'Connor, J. Tauc: "Light scattering in optical waveguides", Appl. Opt. 17, S. 3226-3231, 1978 und in I. Garrett, C.J. Todd: "Review: Components and systems for long-wavelength monomode fiber transmission", Opt. Quantum Electron. 14, S. 95-143, 1982.

Die Erfindung hat den Vorteil, dass durch die vorherige Verstärkung dem Photodetektor ein stärkeres Eingangssignal zugeführt wird, so dass das Eigenrauschen des Photodetektors und des nachfolgenden Verstärkers sich weniger störend auswirkt.

Die Erfindung umfasst ferner eine Vorrichtung, wobei seitlich aus der Glasfaser durch ohnehin vorhandene Streuprozesse (Rayleigh-Streuung) austretendes Licht auf einen Photodetektor geleitet wird, wobei die Vorrichtung ein fokussierendes Element und eine weitere Glasfaser beinhaltet und das fokussierende Element zwischen der Glasfaser und der Eintrittsfläche der weiteren Glasfaser so angeordnet ist, dass ein Teil des seitlich aus der Glasfaser austretenden Lichts auf die Eintrittsfläche der weiteren Glasfaser geleitet wird, die dadurch gekennzeichnet ist, dass die Vorrichtung einen Erbiumverstärker und einen Photodetektor beinhaltet, wobei die weitere Glasfaser mit dem Eingang des Erbiumverstärkers verbunden ist und ein Ausgang des Erbiumverstärkers optisch mit dem Photodetektor gekoppelt ist.

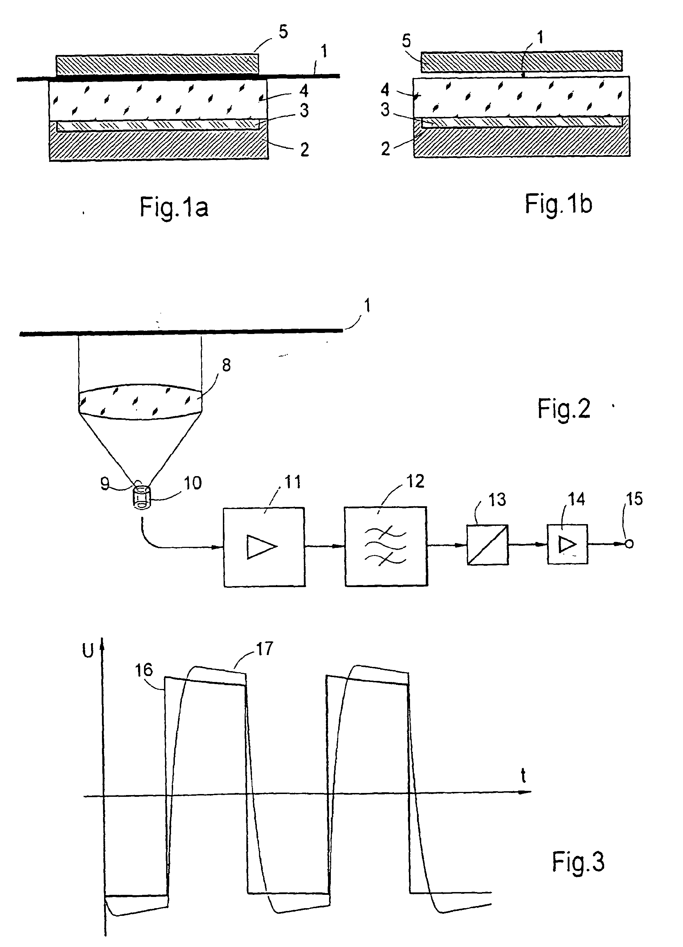

Ein Ausführungsbeispiel der Erfindung ist in der Zeichnung anhand der Figur 2 dargestellt und in der nachfolgenden Beschreibung näher erläutert. Es zeigt:
- Fig. 1: eine Vorrichtung zur Extraktion von Licht entsprechend dem Stand der Technik aus einer Glasfaser in zwei Ansichten,
- Fig. 2: eine schematische Darstellung des Ausführungsbeispiels und
- Fig. 3: als Spannungszeitdiagramme Ergebnisse eines praktischen Versuchs.

Bei der Vorrichtung, die in Fig. la als Längsschnitt und in Fig. 1b als Querschnitt dargestellt ist, ist auf der einen Seite einer Glasfaser 1 ein Photodetektor 2 mit einer lichtempfindlichen Fläche 3 vorgesehen, wobei zwischen der Glasfaser 1 und dem Photodetektor 2 eine entspiegelte Glasscheibe 4 angeordnet ist. Auf der anderen Seite der Glasfaser 1 befindet sich ein Reflektor 5, der beispielsweise aus einer entsprechend polierten Metallplatte oder einer verspiegelten Glasscheibe bestehen kann. Als Photodetektor 2 kommt ein Photoelement auf InGaAs-Basis in Frage. Bei praktischen Versuchen wurde ein solches mit 5 mm Durchmesser verwendet. Dieses hat eine gute Empfindlichkeit in dem für die Nachrichtenübertragung über Glasfasern wichtigen Längenwellenbereich von 1550 nm.

Die Stärke S der Rayleigh-Streuung hängt in folgender Weise von der Wellenlänge des Lichtsignals ab: S = k/(lambda)⁴, wobei k eine Konstante und lambda die Wellenlänge ist. Mit steigender Wellenlänge wird die Streu-Intensität drastisch kleiner. Aufgrund dieser Abhängigkeit ist in dem bei der Nachrichtenübertragung vorherrschenden dritten Übertragungsfenster im Bereich der obengenannten Wellenlänge die Streu-Intensität geringer als im ersten und zweiten Übertragungsfenster. Trotzdem konnten in praktischen Versuchen gute Ergebnisse erzielt werden, die schematisch in Fig. 3 dargestellt sind. Dabei zeigt die Kurve 16 das einem Laser zugeführte Steuersignal, das stellvertretend für das in der Glasfaser übertragene Signal steht und eine Frequenz von etwa 200 Hz aufweist. Kurve 17 zeigt das verstärkte Ausgangssignal des Photodetektors 2.

Wegen der großen Kapazität des verwendeten Photodetektors zeigt das extrahierte Signal eine deutliche Verschleifung der Flanken, während ein überlagertes Rauschsignal, das in Fig. 3 nicht dargestellt ist, so klein ist, dass es die weitere Auswertung nicht beeinflusst.

Bei dem in Fig. 2 schematisch dargestellten Ausführungsbeispiel der Erfindung wird ein Teilstück der Glasfaser 1 über eine Sammellinse 8 auf die Lichteintrittsfläche 9, das heißt auf den Kern einer weiteren Glasfaser 10, abgebildet. Diese leitet das Licht zu einem Erbiumverstärker 11, von dessen Ausgang das verstärkte Licht über ein schmalbandiges optisches Filter 12 einem Photodetektor 13 zugeleitet wird. Das Filter unterdrückt Rauschsignale, die im Erbiumverstärker entstehen und außerhalb des Frequenzbandes des extrahierten Signals liegen. Ansonsten würden diese in das vom Photodetektor 13 erzeugte elektrische Signal eingehen.

Das Ausgangssignal des Photodetektors 13 wird dann über einen möglichst rauscharmen Verstärker 14 verstärkt und steht am Ausgang 15 zur weiteren Verarbeitung zur Verfügung. Geeignete Maßnahmen zur Erhöhung der oberen Grenzfrequenz bei der Ableitung des Signals sind an sich bekannt. Erforderlichenfalls können der Photodetektor und der Verstärker zur Rauschverminderung gekühlt werden.

## Patentansprüche

1. Verfahren zur Extraktion von Signalen aus einer Glasfaser ohne messbare Beeinflussung, insbesondere ohne Dämpfung, der die Glasfaser durchlaufenden Signale, wobei seitlich aus der Glasfaser (1) durch ohnehin vorhandene Streuprozesse (Rayleigh-Streuung) austretendes Licht auf einen Photodetektor geleitet wird, **dadurch gekennzeichnet, dass** das austretende Licht mittels fokussierender Elemente auf eine Eintrittsfläche einer weiteren Glasfaser (10) geleitet wird und über diese zu einem Erbiumverstärker (11) gelangt und dass das Ausgangssignal des Erbiumverstärkers dem Photodetektor (13) zugeführt wird.

2. Vorrichtung zur Extraktion von Signalen aus einer Glasfaser ohne messbare Beeinflussung, insbesondere ohne Dämpfung, der die Glasfaser durchlaufenden Signale, wobei seitlich aus der Glasfaser durch ohnehin vorhandene Streuprozesse (Rayleigh-Streuung) austretendes Licht auf einen Photodetektor geleitet wird, wobei die Vorrichtung ein fokussierendes Element (8) und eine weitere Glasfaser (10) beinhaltet und das fokussierende Element (8) zwischen der Glasfaser (1) und der Eintrittsfläche (9) der weiteren Glasfaser (10) so angeordnet ist, dass ein Teil des seitlich aus der Glasfaser (1) austretenden Lichts auf die Eintrittsfläche (9) der weiteren Glasfaser (10) geleitet wird, **dadurch gekennzeichnet, dass** die Vorrichtung einen Erbiumverstärker (11) und einen Photodetektor (13) beinhaltet, wobei die weitere Glasfaser (10) mit dem Eingang des Erbiumverstärkers (11) verbunden ist und ein Ausgang des Erbiumverstärkers (11) optisch mit dem Photodetektor (13) gekoppelt ist.

## Claims

1. Method for extraction of signals from a glass fiber without measurably influencing, in particular without attenuating, the signals passing through the glass fiber, wherein light emerging laterally from the glass fiber (1) by scattering processes (Rayleigh scattering), said scattering processes being present in any case, is directed onto a photodetector, **characterized in that** the emerging light is directed by means of focusing elements onto an incident surface of an additional glass fiber (10) and reaches an erbium amplifier (11) therethrough, and **in that** the output signal of the erbium amplifier is fed to the photodetector (13).

2. Device for extraction of signals from a glass fiber without measurably influencing, in particular without attenuating, the signals passing through the glass fiber, wherein light emerging laterally from the glass fiber by scattering processes (Rayleigh scattering), said scattering processes being present in any case, is directed onto a photodetector, wherein the device contains a focusing element (8) and an additional glass fiber (10), and the focusing element (8) is arranged between the glass fiber (1) and the incident surface (9) of the additional glass fiber (10) such that a portion of the light emerging laterally from the glass fiber (1) is directed onto the incident surface (9) of the additional glass fiber (10), **characterized in that** the device contains an erbium amplifier (11) and a photodetector (13), wherein the additional glass fiber (10) is connected to the input of the erbium amplifier (11), and an output of the erbium amplifier (11) is optically coupled to the photodetector (13).

## Revendications

1. Procédé d'extraction de signaux d'une fibre de verre sans influence mesurable sur les signaux traversant la fibre, plus particulièrement sans affaiblissement, la lumière qui émerge latéralement de la fibre de verre (1) en raison de processus de diffusion (diffusion Rayleigh) qui se produisent en tout cas étant dirigée sur un photodétecteur,
**caractérisé en ce que** la lumière émergeante est dirigée, par l'intermédiaire d'éléments focalisants, sur la face d'entrée d'une autre fibre de verre (10) et, en passant par celle-ci, arrive à un amplificateur erbium (11), et **en ce que** le signal de sortie de l'amplificateur erbium est amené au photodétecteur (13).

2. Dispositif d'extraction de signaux d'une fibre de verre sans influence mesurable sur les signaux traversant la fibre, plus particulièrement sans affaiblissement, la lumière qui émerge latéralement de la fibre de verre (1) en raison de processus de diffusion (diffusion Rayleigh) qui se produisent en tout cas étant dirigée sur un photodétecteur, le dispositif comprenant un élément focalisant (8) et une autre fibre de verre (10), l'élément focalisant étant disposé de telle manière entre la fibre de verre (1) et la face d'entrée (9) de l'autre fibre de verre (10) qu'une partie de la lumière émergeant latéralement de la fibre de verre (1) est dirigée sur la face d'entrée (9) de l'autre fibre de verre (10), **caractérisé en ce que** le dispositif comprend un amplificateur erbium (11) et un photodétecteur (13), l'autre fibre de verre (10) étant reliée à l'entrée de l'amplificateur erbium (11) et une sortie de l'amplificateur erbium (11) étant couplée optiquement au photodétecteur (13).
